# EUROPEAN PATENT SPECIFICATION

(11) **EP 0 923 777 B1**
(45) Date of publication and mention of the grant of the patent: **10.01.2001**
(21) Application number: 97939002.8
(22) Date of filing: 01.09.1997
(51) Int. Cl.: H01B 3/44

(54) **WIRE COATING COMPOSITION**
DRAHTBESCHICHTUNGSZUBEREITUNG
COMPOSITION D'UN REVETEMENT DE CABLE

(30) Priority: 05.09.1996 GB 9618488
(43) Date of publication of application: 23.06.1999
(73) Proprietor: SCAPA GROUP PLC, Blackburn, Lancashire BB2 6AY (GB)
(72) Inventor: SAWYER, Dudley, Noel;14 Sadlers Wells,Bunbury, Cheshire CW6 9NU (GB); ARTINGSTALL, Lai, Ping, Manchester M34 5WB (GB); PRESTON, Joseph, Cheshire CW1 5AL (GB)
(74) Representative: Goodwin, Mark
(86) International application number: GB9702343
(87) International publication number: WO9810432

(56) References cited:
- DE-A- 2 646 965
- CHEMICAL ABSTRACTS, vol. 123, no. 6, 7 August 1995 Columbus, Ohio, US; abstract no. 58393, page 131; XP002045300 & JP 07 094 028 A (HITACHI CABLE) 7 April 1995

## Description

The present invention relates to a wire coating composition. The term "wire" used herein embraces both wires and cables.

It is conventional to provide a polymeric insulation coating around wires and cables. Such coatings are often made from halogenated polymers, such as polyvinyl chloride (PVC). The main problem of PVC and other halogenated polymers is that upon combustion a large volume of toxic, acidic and highly corrosive hydrogen halide smoke is liberated. As a consequence halogen-free polymer compositions for coating cables or wires have been developed. Examples of such compositions are included in EP 082407A, EP 488381A and US 5032321. These and other prior art halogen-free coating compositions, which are based upon thermoplastic polymer/mineral filler mixtures, possess inadequate ageing properties, electrical insulation properties and temperature stability. These coating compositions have a maximum temperature range of only 70-80°C. These compositions also have poor ageing properties. Furthermore, the extrusion speed for compositions of the type disclosed in EP 082407A, EP 488381A and US 5032321 may only be one fifth of that for PVC. Similar compositions containing intumescent system flame retardants, such as ammonium polyphosphate, have also been shown to exhibit inadequate electrical resistance due to the fact that the flame retardant attracts moisture and therefore increases the electrical conductivity of the material. It is noted that conventional phosphorous-based flame retardants are present in relatively large amounts, usually up to 40 php for ammonium polyphosphate.

A disadvantage with red phosphorous-based systems is that the cable coatings have a strong red colouring, which is disadvantageous for electrical cable coatings in general.

The aim of the invention is to provide a recyclable and/or reprocessable halogen-free coating composition with improved ageing resistance, electrical insulation and temperature resistance properties without a deterioration in other physical properties, such as tensile strength or flexibility. Such a cable coating would be ideal for use in lighting cable coatings for ships.

According to a first aspect of the present invention there is provided a wire as coated with a coating composition, said coating composition comprising polypropylene polymer or copolymer and magnesium hydroxide provided with a hydrophobic coating, wherein the coating composition comprises from 100 to 200 parts per hundred parts of polypropylene of magnesium hydroxide and wherein the wire coating composition does not contain any halogen and is essentially free of phosphorous and phosphorous compounds and phosphorous salts, and is furthermore free of polyethylene wax.

According to a second aspect of the present invention there is provided the use of a coating composition in coating a wire, wherein the coating composition comprises polypropylene polymer or copolymer and magnesium hydroxide provided with a hydrophobic coating, wherein the coating composition comprises from 100 to 200 parts per hundred parts of polypropylene of magnesium hydroxide, and wherein the wire coating composition does not contain any halogen and is essentially free of phosphorous and phosphorous compounds and phosphorous salts, and is furthermore free of polyethylene wax.

The term "essentially" is used herein to mean that the composition is free from "phosphorous" or compounds or salts thereof or has a phosphorous content of less than 800 ppm.

The wire coating composition of the present invention exhibits the required coating charactaristics, but unlike some PVC compounds is readily recyclable. The coating composition of the invention further provides the required electrical insulation, while being flexible, flame resistant, heat stable to greater than 125°C, abrasion resistant, readily extrudable and recyclable.

The components of the composition are ideally present in the following ratio:

| | |
|---|---|
| polypropylene | 100 php (parts per hundred polypropylene); and |
| magnesium hydroxide (coated) | substantially 140 php. |

The coating compositions are particularly useful for cables in ships, such wires being subjected to high temperatures and contact with sea water and fluids such as fuel oil typically found in ships. It is necessary for wire coating materials to have a temperature rating of greater than 100°C, at which temperature the coating should remain stable and retain electrical insulation properties. The coating compositions according to the invention possess a temperature rating of greater than 125°C. The temperature rating is the maximum temperature at which a given insulation or jacket may be safely maintained during continuous use without incurring any thermally-induced deterioration.

In order to satisfy the ageing requirements of cables for use in ships the cable coating must meet the demands of IEC 92-351, i.e. they must have a retention of at least 70% in tensile strength and elongation at break following 7 days storage at 135 ± 2°C.

The magnesium hydroxide acts as a filler and flame retardant. In order to overcome the problems of moisture attraction associated with intumescent flame retardant systems, the magnesium hydroxide particles are coated with a hydrophobic material such as an alkyl silane, for example a trimethoxysiiane or triethoxysilane. The coating enhances adhesion between the filler particles and the polymer matrix, improves the abrasion resistance of the coating and most importantly, due to its hydrophobic nature, increases the resistance of the coating to moisture entrapment thereby maintaining electrical insulation properties. Magnesium hydroxide is also stable at high temperature, whilst its low surface area gives it a low viscosity. It is therefore easy to process.

The preferred amount of 140 php magnesium hydroxide content gives the ideal balance between flame retardance and flexibility. A high filler content gives excellent flame retardance. However, at the same time the coating will become much less flexible such that the coated wire will fail a standard conductance test whereby a wire is tightly coiled (typically around lmm diameter mandrel) and stored in hot water (normally 80°C) whilst under high voltage. If the coating is not flexible enough then it will crack at the coil heads.

A further advantage of the compositions according to the invention is that they can be extruded onto wire or cable using existing extrusion equipment at speeds similar to that of PVC coatings.

A cost saving may be made by using the coating compositions of the invention using the high temperature rating of the coatings. Normally a copper wire becomes hot due to the conduction of the electrical current. The high temperature rating of the coating means that the thin layers of coating can be used on thin wires, representing a saving of expensive copper.

A preferred embodiment of the invention involves the incorporation into the composition of a synergistic blend of an anti-oxidant derived from phenol and anti-oxidant based upon a phosphite. Suitable anti-oxidants are those marketed by Ciba-Geigy under the trade marks IRGANOX and IRGAFOS. Such anti-oxidants are present in an amount of only 0.1 to 5 php. Such phosphite contents are sufficiently low to have a negligible moisture attraction capability. In such compositions good processability is retained without adversely effecting the other physical properties of the coating. This aids further reprocessing of the coatings and therefore improves the recyclability of the compositions.

The polymeric composition of the invention may optionally further comprise additives such as stabilisers, plasticisers, lubricants and further flame retardants.

In order that the invention may be more readily understood a specific embodiment of the invention is now described in detail.

### Example 1

A composition was made from the following formulation

| | |
|---|---|
| 100 php | Moplen D50G |
| 140 php | Magnefin SE630 |
| 2.4 php | Araldite GT 7072 |
| 0.5 php | Calcium stearate |
| 1.5 php | stearic acid |
| 2 php | Ultranox 815A |
| (php = parts per hundred parts of polymer) | |

1. Moplen D50G is a trade name of Himont for a propylene copolymer.
2. Magnefin SE630 is a trade name of Martinswerk for magnesium hydroxide.
3. Araldite GT7072 is a tradename of Ciba-Geigy for an adhesion promoter.
4. Ultranox 815A is a GE Speciality Chemicals tradename for a 50/50 weight ratio free flowing blend of Ultranox 626 (tradename for bis-(2,4-di-t-butylphenyl) pentaerythritol diphosphite, an anti-oxidant) and Ultranox 210 (tradename for tetrakis-[methylene-(3,5-di-t-butyl-4-hydroxyhydrocinnamate)]-methane, an anti-oxidant).

A cable coating prepared from this compound gave the following properties:

| Properties | Test Method | Units | Typical Value |
|---|---|---|---|
| Tensile strength | DEC 811-1-1 | MPa | > 10 |
| Elongation at break | IEC 811-1-1 | % | > 350 |
| Tear Strength | BS 6469:99.1 | N/mm | 12 |
| After Ageing 7 days at 135°C | IEC 811-1-2 | | |
| Retention of tensile strength | | % | 85 |
| Retention of elongation | | % | 75 |

| **Thermomechanical Properties** | | | |
|---|---|---|---|
| Hot pressure at 135°C | IEC 811-3-1 | % | 5 |
| Cold impact at -40°C | IEC 811-1-4 | | No cracks |
| Cold blend at -40°C | IEC 811-1-4 | | No cracks |

| **Fire and Smoke Test Properties** | | | |
|---|---|---|---|
| Oxygen index | ISO 4589-2 | % | 28 |
| Halogen acid gas evolution | IEC 754-1 | % | 0 |
| Corrosivity of gases | IEC 754-2 | | |
| pH | | | 4.3 |
| Conductivity | | µS/cm | 9 |
| Smoke density - Flaming | ASTM E-662 | Ds max | 54 |
| mode | | | |
| Time to maximum | | minutes | 19 |
| Smoke density - Non | | | |
| flaming mode | ASTM E-662 | Ds max | 205 |
| Time to maximum | | minutes | 20 |
| Toxicity index | NES 713 | | 1.4 |

### Oil Resistance Properties

| **Medium** | **Temperature** | **Duration** | **Retention of tensile strength %** | **Retention of elongation at break %** |
|---|---|---|---|---|
| ASTM 2 | 23°C | 7 days | 101 | 90 |
| ASTM 2 | 70°C | 4 hours | 97 | 85 |
| DIESEL | 23°C | 7 days | 103 | 70 |
| DIESEL | 70°C | 4 hours | 103 | 80 |

| | **TEST METHOD** | **UNIT** | **TYPICAL VALUE** |
|---|---|---|---|
| **ELECTRICAL PROPERTIES** | | | |
| Dielectric constant at 1 MHz | ASTM D-150 | | 2.94 |
| Dissipation factor at 1 MHz | ASTM D-150 | | 0.002 |
| Insulation resistance at 20°C Initial value | BS 6469:99.2 | ohm.cm | 10¹⁵ |
| After 21 days immersion in water | | ohm.cm | 10¹⁴ |
| Insulation resistance after 2 hours | BS 6469:99.2 | | |
| at 70°C | | ohm.cm | 3 x 10¹³ |
| at 80°C | | ohm.cm | 1 x 10¹³ |
| at 90°C | | ohm.cm | 6 x 10¹² |

| **OTHER PROPERTIES** | | | |
|---|---|---|---|
| Specific gravity | ASTM D-792 | g/cc | 1.40 |
| Hardness | ASTM D-2240 | Shore D | 73 |
| Melt flow index | IEC 811-4-1 | g/10min | 0.1 |

It is to be understood that the embodiment described above is by way of illustration only. Many modifications and variations are possible.

## Claims

1. A wire as coated with a coating composition, said coating composition comprising polypropylene polymer or copolymer and magnesium hydroxide provided with a hydrophobic coating, wherein the coating composition comprises from 100 to 200 parts per hundred parts of polypropylene of magnesium hydroxide and wherein the wire coating composition does not contain any halogen and is essentially free of phosphorous and phosphorous compounds and phosphorous salts, and is furthermore free of polyethylene wax.

2. A wire as coated with a coating composition as claimed in claim 1, wherein the composition comprises substantially 140 parts per hundred parts of polypropylene of magnesium hydroxide.

3. A wire as coated with a coating composition as claimed in claim 1 or claim 2, wherein the coating composition has a temperature rating of greater than 125°C.

4. A wire as coated with a coating composition as claimed in any preceding claim, wherein the said hydrophobic coating comprises an alkyl silane.

5. A wire as coated with a coating composition as claimed in claim 4, wherein the alkyl silane comprises a trimethoxysilane or triethoxysilane.

6. A wire as coated with a coating composition as claimed in any preceding claim, wherein the composition comprises from 0.1 to 5 parts per hundred parts of polypropylene of anti-oxidant.

7. A wire as coated with a coating composition as claimed in claim 6, wherein the anti-oxidant comprises a blend of bis-(2,4-di-t-butylphenyl) pentaerythritol diphosphite and tetrakis-[methylene-(3,5-di-t-butyl-4-hydroxyhydrocinnamate)]-methane.

8. A wire as coated with a coating composition substantially as defined herein with reference to the example.

9. The use of a coating composition in coating a wire, wherein the coating composition comprises polypropylene polymer or copolymer and magnesium hydroxide provided with a hydrophobic coating, wherein the coating composition comprises from 100 to 200 parts per hundred parts of polypropylene of magnesium hydroxide, and wherein the wire coating composition does not contain any halogen and is essentially free of phosphorous and phosphorous compounds and phosphorous salts, and is furthermore free of polyethylene wax.

## Patentansprüche

1. Draht mit einer Umhüllung aus einem Umhüllungsmaterial, das ein Polypropylen-Polymer oder -Copolymer und eine wasserabweisende Beschichtung aufweisendes Magnesiumhydroxid enthält, wobei das Umhüllungsmaterial zwischen 100 und 200 Teile pro hundert Teile Polypropylen mit Magnesiumhydroxid aufweist, und wobei das Drahtumhüllungsmaterial kein Halogen enthält und im wesentlichen frei von Phosphor und Phosphorverbindungen sowie Phosphorsalzen und außerdem frei von Polyethylenwachs ist.

2. Draht mit einer Umhüllung aus einem Umhüllungsmaterial nach Anspruch 1,
wobei das Umhüllungsmaterial im wesentlichen 140 Teile pro hundert Teile Polypropylen mit Magnesiumhydroxid aufweist.

3. Draht mit einer Umhüllung aus einem Umhüllungsmaterial nach Anspruch 1 oder Anspruch 2,
wobei das Umhüllungsmaterial eine Nenntemperatur von mehr als 125°C aufweist.

4. Draht mit einer Umhüllung aus einem Umhüllungsmaterial nach einem vorhergehenden Anspruch,
wobei die wasserabweisende Beschichtung Alkylsilan enthält.

5. Draht mit einer Umhüllung aus einem Umhüliunasmaterial nach Anspruch 4,
wobei das Alkylsilan Trimethoxysilan oder Triethoxysilan enthält.

6. Draht mit einer Umhüllung aus einem Umhüllungsmaterial nach einem vorhergehenden Anspruch,
wobei das Umhüllungsmaterial zwischen 0,1 und 5 Teile pro hundert Teile Polypropylen mit Antioxidans aufweist.

7. Draht mit einer Umhüllung'aus einem Umhüllungsmaterial nach Anspruch 6,
wobei das Antioxidans ein Gemisch aus Bis-(2,4-di-t-butylphenyl)pentaerythrit-diphosphit und Tetrakis-[methylen-(3,5-di-t-butyl-4-hydroxyhydrocinnamat)]-methan umfaßt.

8. Draht mit einer Umhüllung aus einem Umhüllungsmaterial,
im wesentlichen wie hier unter Bezugnahme auf das Beispiel definiert.

9. Verwendung eines Umhüllungsmaterials zum Umhüllen eines Drahtes,
wobei das Umhüllungsmaterial ein Polypropylen-Polymer oder -Copolymer und eine wasserabweisende Beschichtung aufweisendes Magnesiumhydroxid enthält, wobei das Umhüllungsmaterial zwischen 100 und 200 Teile pro hundert Teile Polypropylen mit Magnesiumhydroxid aufweist, und wobei das Drahtumhüllungsmaterial kein Halogen enthält und im wesentlichen frei von Phosphor und Phosphorverbindungen sowie Phosphorsalzen und außerdem frei von Polyethylenwachs ist.

## Revendications

1. Câble revêtu avec une composition de revêtement, ladite composition de revêtement comprenant un polymère ou copolymère de polypropylène et de l'hydroxyde de magnésium pourvu d'un revêtement hydrophobe, caractérisé en ce que la composition de revêtement comprend de 100 à 200 parties d'hydroxyde de magnésium pour 100 parties de polypropylène et en ce que la composition de revêtement du câble ne contient aucun atome d'halogène et est pour l'essentiel exempte de phosphore, de composés phosphorés et de sels phosphorés et est en outre exempte de cire à base de polyéthylène.

2. Câble revêtu avec une composition de revêtement tel que revendiqué en revendication 1, caractérisé en ce que la composition comprend environ 140 parties d'hydroxyde de magnésium pour 100 parties de polypropylène.

3. Câble revêtu avec une composition de revêtement tel que revendiqué en revendication 1 ou revendication 2, dans lequel la composition de revêtement a une température efficace supérieure à 125°C.

4. Câble revêtu avec une composition de revêtement tel que revendiqué dans l'une quelconque des précédentes revendications, caractérisé en ce que le revêtement hydrophobe comprend un alkylsilane.

5. Câble revêtu avec une composition de revêtement tel que revendiqué en revendication 4, caractérisé en ce que l'alkylsilane comprend un triméthoxysilane ou un triéthoxysilane.

6. Câble revêtu avec une composition de revêtement tel que revendiqué dans l'une quelconque des revendications précédentes, caractérisé en ce que la composition comprend de 0,1 à 5 parties d'agent anti-oxydant pour 100 parties de polypropylène.

7. Câble revêtu avec une composition de revêtement tel que revendiqué en revendication 6, caractérisé en ce que l'agent anti-oxydant comprend un mélange de bis-(2,4-di-t-butylphényl)pentaerythritol diphosphite et tetrakis-[méthylène-(3,5-di-t-butyl-4-hydroxyhydrocinnamate)]-méthane.

8. Câble revêtu avec une composition de revêtement correspondant à celle de l'exemple.

9. Utilisation d'une composition de 'revêtement pour le revêtement d'un câble, caractérisée en ce que la composition de revêtement comprend un polymère ou copolymère de polypropylène et de l'hydroxyde de magnésium pourvu d'un revêtement hydrophobe, caractérisée en ce que la composition de revêtement comprend 100 à 200 parties d'hydroxyde de magnésium pour 100 parties de polypropylène et dans laquelle la composition de revêtement du câble ne contient aucun atome d'halogène et est pour l'essentiel exempte de phosphore, de composés phosphorés et de sels phosphorés, et est en outre exempte de cire de polyéthylène.
